Europäisches Patentamt

European Patent Office

Office européen des brevets

(11) Veröffentlichungsnummer: **0 416 273 A1**

## EUROPÄISCHE PATENTANMELDUNG

(21) Anmeldenummer: 90114428.7

(22) Anmeldetag: 27.07.90

(51) Int. Cl.⁵: **B28B 5/02**, C04B 35/00

(30) Priorität: 07.09.89 CH 3256/89

(43) Veröffentlichungstag der Anmeldung:
**13.03.91 Patentblatt 91/11**

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) Verfahren zur kontinuierlichen Herstellung einer beidseitig aufgerauhten dünnen Keramikfolie mit gezielter Oberflächenstruktur.

(57) Verfahren zur kontinuierlichen Herstellung einer beidseitig aufgerauhten dünnen elastischen Keramikfolie mit gezielter Oberflächenstruktur nach dem Bandgiessprozess, wobei ein mit Lösungsmitteln und Bindemitteln plastifiziertes Keramikpulver (1) in Form einer Paste auf ein auf einem Förderband (4) ruhendes offen poröses Band als untere Abdeckung (6) gegossen, durch eine Schneide (5) glattgestrichen und kalibriert und mit einem offen porösen Band als obere Abdeckung (8) abgedeckt und das derart beidseitig belegte Laminat (10) getrocknet und gesintert wird. Variante I: Abdeckungen (6;8) aus organischem, zersetzbaren Material. Variante II: Abdeckungen (6;8) aus anorganischem, nicht zersetzbaren Material, wobei das getrocknete Laminat (10) abgelöst wird. Variante III: Untere Abdeckung (6) aus zu verbindender Keramikschicht.

FIG.4

# VERFAHREN ZUR KONTINUIERLICHEN HERSTELLUNG EINER BEIDSEITIG AUFGERAUHTEN DÜNNEN KERAMIKFOLIE MIT GEZIELTER OBERFLÄCHENSTRUKTUR

## TECHNISCHES GEBIET

Elastische und/oder duktile keramische Werkstoffe in Form von dünnen Folien und dünnen Platten. Keramische Werkstoffe in Form biegsamer dünner Schichten gewinnen als Konstruktionsstoffe und auch als Träger spezieller Funktionen in der Thermodynamik und in der Elektrotechnik vermehrt an Bedeutung.

Die Erfindung betrifft die Weiterentwicklung und Verbesserung von Verfahren zur Herstellung dünner Folien mit ganz bestimmten Eigenschaften bezüglich ihrer Oberflächenausbildung im Hinblick auf die Verankerung zusätzlicher aufzubringender Schichten aus keramischen, keramisch-metallischen oder metallischen Materialien.

Im engeren Sinne bezieht sich die Erfindung auf ein Verfahren zur kontinuierlichen Herstellung einer beidseitig aufgerauhten dünnen, elastischen Keramikfolie mit gezielter Oberflächenstruktur nach dem Bandgiessprozess, wobei als Keramikmasse ein mit Lösungsmitteln und Bindemitteln plastifiziertes Keramikpulver in Form einer Paste oder eines Breis auf ein horizontal bewegtes Förderband aufgebracht, mittels einer Schneide glattgestrichen und kalibriert und das auf diese Weise erzeugte Laminat vom Förderband abgelöst und das darin enthaltene Lösungsmittel verdampft und die derart erhaltene, noch das Bindemittel enthaltende elastische Keramikfolie nach Massgabe des Verwendungszwecks geschnitten, weiterverarbeitet und gesintert wird.

## STAND DER TECHNIK

Dünne Folien aus keramischen Werkstoffen wurden in herkömmlicher Weise vorwiegend nach dem Bandgiessverfahren ("tape casting") hergestellt. Eine aus keramischem Pulver und Lösungsmitteln und Bindern bestehende Suspension wird auf ein Forderband gegossen. Vor allem zur Herstellung elektronischer Bauteile werden dünne Keramikschichten benötigt, die nach diesem Verfahren hergestellt werden. Das Verfahren ist von G.Y. Onoda, Jr., "Ceramic Processing Before Firing", John Wiley & Sons, New York, (1978), pp. 411-448 beschrieben.

In der Regel wird die Suspension auf sich bewegende Bänder aus poliertem Metall oder Kunststoff gegossen, dann mit Hilfe einer senkrecht zur Bandebene und zur Bewegungsrichtung stehenden Schneide auf die gewünschte Dicke gebracht und danach mitsamt der bewegten Unterlage zum Abdampfen der Lösungsmittel durch erwärmte Zonen bewegt. Diese Behandlung ergibt Bänder mit glatter Oberfläche, was für die meisten Anwendungen erwünscht ist. Diese glatten Oberflächen werden vor oder nach dem Sintern bedruckt oder beschichtet, wobei im Bereich der Elektronik metallische Auftragungen mit elektrischer Leitfähigkeit dominieren. Diese haften auch an glatten Oberflächen gut. Auch verlangt dieses Anwendungsgebiet keine gegenseitige Durchdringung von bandgegossener Trägerschicht und aufgebrachter Funktionsschicht.

Für die Herstellung keramischer Elektrolytplatten werden jedoch andere Anforderungen gestellt. Man möchte gerne eine Verzahnung des durch Bandgiessen hergestellten Elektrolyten mit den auf diesen aufgebrachten Elektroden erreichen. Erstens wird durch Verzahnung der beiden Elektrodenschichten mit dem Elektrolyten die Haftung verbessert. Zweitens werden die durch den Elektrolyt wandernden Sauerstoffionen besser in die Elektrode getragen und drittens wird die Kontaktfläche zwischen Elektrolyt und Elektrode vergrössert. Da die Haftung zwischen Bandfolien aus Zirkonoxyd und Elektroden Schwierigkeiten bereitet, wird die glatte Oberfläche der Folie häufig nach dem Sintern mechanisch durch Sandstrahlen oder Schmirgeln aufgerauht. Dadurch entstehen Mikrorisse, die Ursache für späteren Materialbruch sein können.

Es besteht daher ein Bedürfnis nach Weiterentwicklung und Verbesserung der oben beschriebenen Verfahren, insbesondere im Hinblick auf die Herstellung von elektrochemischen keramischen Hochtemperaturzellen.

## DARSTELLUNG DER ERFINDUNG

Es ist Aufgabe der Erfindung, ein Verfahren zur kontinuierlichen Herstellung einer beidseitig aufgebrachten dünnen, elastischen Keramikfolie mit gezielter Oberflächenstruktur anzugeben, wobei der Bandgiessprozess herangezogen werden soll. Das Verfahren soll die reproduzierbare Fertigung eines dünnen, flächigen Keramikkörpers mit gezielt strukturierter und vollkommen rissfreier Oberfläche gewährleisten, auf die nachträglich weitere fest haftende, verzahnte Schichten aufgebracht werden können. Insbesondere soll das Verfahren das einwandfreie Aufbringen einer keramischen Elektrolytschicht auf einer aufgerauhten keramischen Elektrodenschicht oder umgekehrt ermöglichen, wobei ein optimaler mechanischer und elektrischer Kraftschluss erzielt wird.

Diese Aufgabe wird dadurch gelöst, dass beim eingangs erwähnten Verfahren das plastifizierte Keramikpulver auf ein offen poröses erstes Band als untere Abdeckung gegossen und mit einem offen porösen zweiten Band als obere Abdeckung abgedeckt wird und dass das erzeugte, beiseitig mit einem porösen Band belegte Laminat der thermischen Weiterverarbeitung zugeführt wird.

WEG ZUR AUSFÜHRUNG DER ERFINDUNG

Die Erfindung wird anhand der nachfolgenden, durch Figuren näher erläuterten Ausführungsbeispiele beschrieben.

Dabei zeigt:

Fig.1 ein Fliessbild (Blockdiagramm) des grundsätzlichen Verfahrens,

Fig.2 ein Fliessbild (Blockdiagramm) einer Variante des Verfahrens mit Ablösung des Laminats von den porösen Bändern,

Fig.3 ein Fliessbild (Blockdiagramm) einer Variante des Verfahrens zur Herstellung eines mit einem Elektrodenwerkstoff beschichteten Feststoffelektrolyten,

Fig.4 den schematischen Aufbau (Längsschnitt) einer Vorrichtung zur Durchführung des Verfahrens.

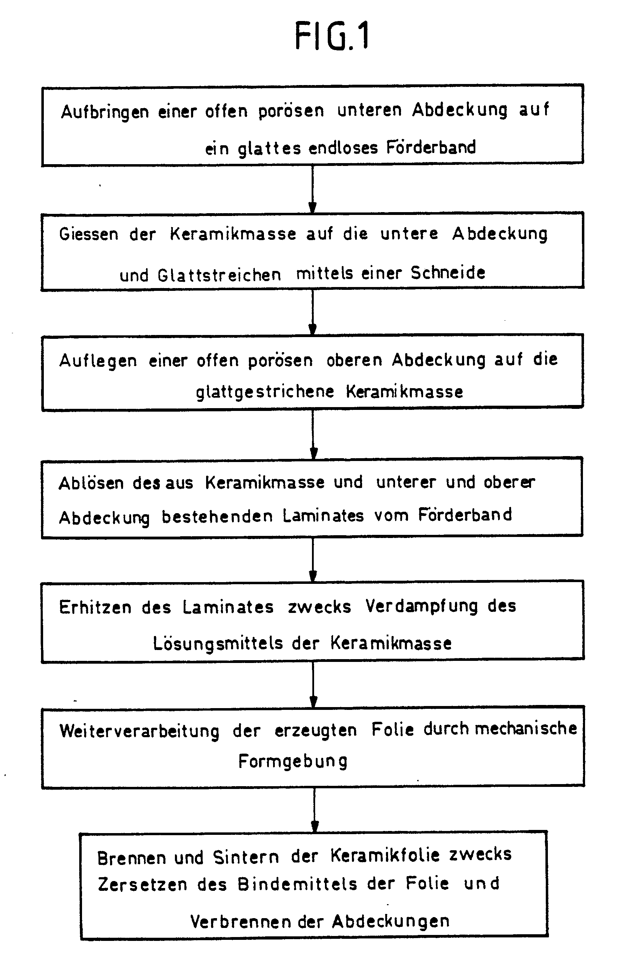

In Fig.1 ist ein Fliessbild (Blockdiagramm) des grundsätzlichen Verfahrens dargestellt. Die Figur bedarf keiner weiteren Erläuterungen. Bei dieser Verfahrensvariante wird das aus Keramikmasse und unterer und oberer Abdeckung bestehende Laminat als Gesamtheit bis zum Enderzeugnis weiterverarbeitet.

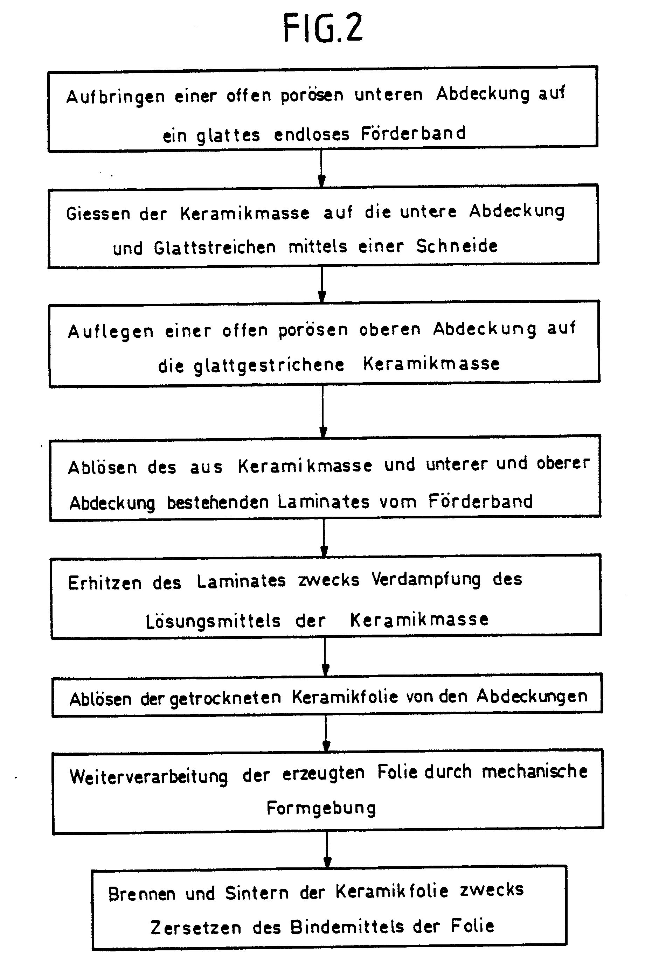

In Fig.2 ist ein Fliessbild (Blockdiagramm) einer Variante des Verfahrens mit Ablösung des Laminats von den porösen Bändern dargestellt. Die Figur erklärt sich selbst.

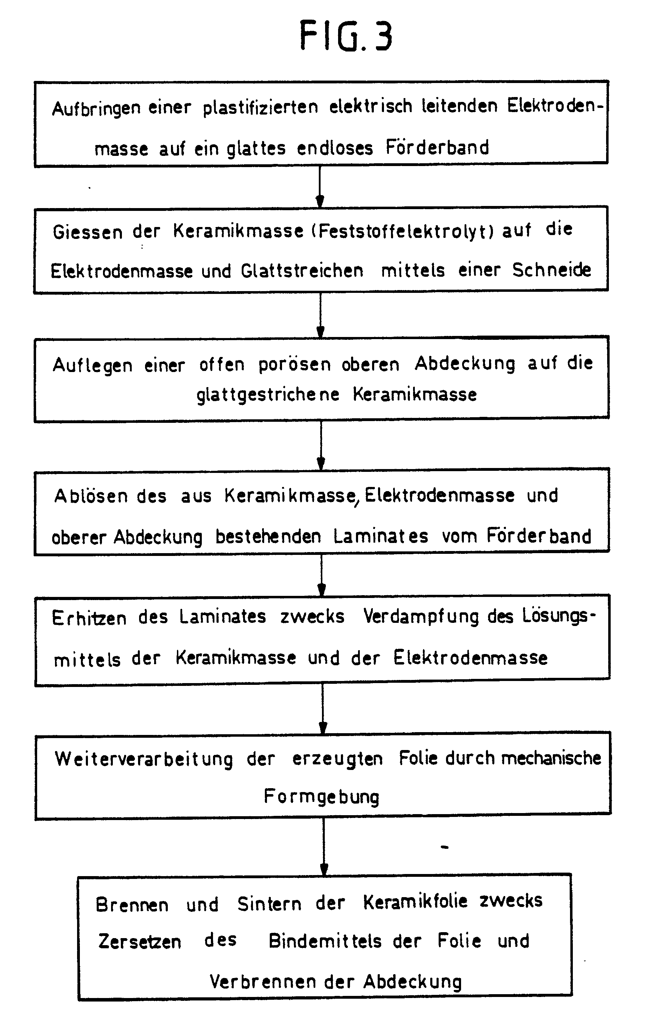

Fig.3 zeigt ein Fliessbild (Blockdiagramm) einer Variante des Verfahrens zur Herstellung eines mit einem Elektrodenwerkstoff beschichteten Feststoffelektrolyten. Die Figur bedarf keiner weiteren Erklärungen. Bei dieser Verfahrensvariante stellt die Elektrodenmasse direkt die untere Abdeckung dar.

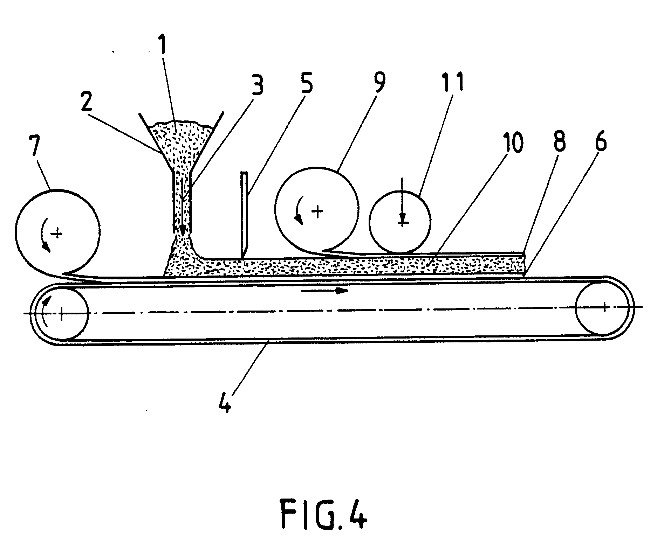

Fig.4 bezieht sich auf den schematischen Aufbau (Längsschnitt) einer Vorrichtung zur Durchführung des Verfahrens. 1 ist das als Keramikmasse dienende plastifizierte Keramikpulver in Form einer Paste oder eines Breis, welche sich in einem Vorratsbehälter 2 befindet. Die Zufuhr 3 dieser Keramikmasse erfolgt über einen schmalen Spalt (Andeutung durch vertikalen Pfeil). 4 ist ein endlos umlaufendes, horizontal bewegtes Förderband aus Metall oder Kunststoff. 5 stellt eine Schneide zum Glattstreichen und Kalibrieren der Keramikmasse dar. 6 ist eine untere, 8 eine obere Abdeckung in Form eines offen porösen Bandes. Die Abdeckungen 6 und/oder 8 bestehen entweder aus zersetzbaren Materialien wie Papiervlies, Löschpapier, Filz, Textilgewebe, Schaumgummi, Kunststoffschaum oder Kunstfasergeflecht oder aus nicht zersetzbaren Stoffen wie Drahtgeflecht, Drahtnetz, gelochtem Blech, mit Noppen oder Stacheln versehenem Blech oder Metallschaum. 7 bzw. 9 sind die Vorratsrollen der unteren bzw. oberen Abdeckung (6;8). 10 stellt das Laminat aus der Keramikmasse dar. Zur innigen Haftung und Verdichtung dient die Anpresswalze 11.

Ausführungsbeispiel 1:

Aus $Al_2O_3$-Pulver mit der Partikelgrösse 0,5 bis 5 µm wurde durch Vermischen und Mahlen mit 35 Gew.-% Trichloräthylen als Lösungsmittel und 5 Gew.-% Polyvinylbutyrol als Bindemittel ein Schlikker (Paste) hergestellt. Es wurden ausserdem die üblichen Zusätze in Form von Dispergierungs- und Kompaktierungsmitteln, Kornwachstumsinhibitoren und Sinteradditiven beigemischt. Dieses plastifizierte Keramikpulver 1 wurde auf ein auf einem horizontalen Föderband 4 ruhendes, als untere Abdeckung 6 dienendes poröses Band in Form eines Papiervlieses gegossen. Dabei bewegte sich die in einem Vorratsbehälter 2 befindliche Keramikmasse durch einen 150 mm breiten Schlitz mit 3 mm lichter Weite vertikal nach unten. Das Förderband 4 bewegte sich mit einer Geschwindigkeit von 200 mm/min in horizontaler Richtung, wobei es die von der Vorratsrolle 7 abgewickelte untere Abdeckung 6 mitschleppte. Die Keramikmasse wurde durch die Schneide 5 in der Höhe begrenzt, glattgestrichen und auf eine Dicke von 2 mm kalibriert. Von einer weiteren Vorratsrolle 9 wurde ein als obere Abdekkung 8 dienendes poröses Band in Form eines Löschpapiers abgewickelt und durch die Anpresswalze 11 fest auf die Keramikmasse gedrückt. Das beidseitig auf diese Weise beplankte Laminat 10 aus Keramikmasse wurde vom Förderband 4 abgezogen und zunächst durch einen Durchlaufofen geleitet und bei 120 °C getrocknet. Die flexible Folie wurde nochmals zwischen Walzen auf eine Dicke von ca. 0,8 mm kalibriert und bei 300 °C behandelt. Dabei zersetzten sich die organischen Substanzen nahezu vollständig. Die immer noch flexible Folie wurde nun in Stücke geschnitten, die linear etwa 12 % grösser als die beabsichtigten Endabmessungen waren und anschliessend in einem Ofen bei einer Temperatur von 1600 °C während 2 h gesintert. Das Endprodukt waren nahezu dicht gesinterte Scheiben von ca. 0,7 mm Dicke mit einer dem Papiervliess und dem Löschpapier entsprechenden strukturierten rauhen Oberfläche. Die Rauhigkeiten betrugen ca. 70-80 $\mu$m (Papiervliesseite) und ca. 40-50 $\mu$m (Löschpapierseite).

Ausführungsbeispiel 2:

Aus $SiO_2$-Pulver mit der Partikelgrösse 5 bis 10 $\mu$m wurde durch Vermischen und Mahlen mit 30 Gew.-% Toluol als Lösungsmittel und 10 Gew.-% Polyvinylchlorid als Bindemittel eine Paste hergestellt. Als Plastifizierungsmittel wurden neben den unter Beispiel 1 genannten Zusätzen noch 2 Gew.-% Polyäthylenglykol beigegeben. Dieses plastifizierte Keramikpulver 1 wurde als Paste auf ein auf einem horizontalen Förderband 4 ruhendes, als untere Abdeckung 6 dienendes poröses Band in Form einer Schaumgummibahn gegossen. Nun wurde genau gleich wie unter Beispiel 1 angegeben, verfahren. Als obere Abdeckung 8 diente ein poröses Band aus einem Kunstfasergeflecht. Die flexible Folie wurde zwischen Walzen auf eine Dikke von 0,5 mm kalibriert. Die Rauhigkeiten des Endproduktes betrugen ca. 100 - 120 $\mu$m (Schaumgummiseite) und ca. 60 -70 $\mu$m (Kunstfasergeflechtseite).

Ausführungsbeispiel 3:

Aus SiC-Pulver mit der Partikelgrösse 0,1 bis 1 $\mu$m wurde durch Vermischen mit 40 Gew.-% Trichloräthylen als Lösungsmittel und 4 Gew.-% Polyvinylchlorid/Polyvinylazetat (Copolymer) als Bindemittel unter Beimischen der üblichen Zusätze ein Schlicker hergestellt. Dieses plastifizierte Keramikpulver 1 wurde auf ein auf einem horizontalen Förderband 4 aufliegendes, als untere Abdeckung 6 dienendes feinmaschiges Drahtgeflecht gegossen. Die Keramikmasse floss dabei durch einen Schlitz mit 2 mm lichter Weite. Das Förderband 4 bewegte sich mit einer Geschwindigkeit von 120 mm/min in horizontaler Richtung. Die Keramikmasse wurde durch die Schneide 5 auf eine Dicke von 1,4 mm kalibriert. Von der Vorratsrolle 9 wurde als obere Abdeckung 8 eine Bahn aus Metallschaum abgewickelt und auf die Keramikmasse gedrückt. Das beidseitig auf diese Weise beplankte Laminat 10 aus Keramikmasse wurde vom Förderband 4 abgelöst und in einem Durchlaufofen bei 120 °C getrocknet. Dann wurde das Laminat 10 sowohl von der oberen wie von der unteren Abdeckung (8 bzw. 6) abgelöst und bei ca. 250 °C weiterbehandelt. Die flexible Folie wurde nun in Stücke zerschnitten und in einem Ofen bei einer Temperatur von 1800 °C in reduzierender Atmosphäre während 3 h gesintert. Das Endprodukt bestand aus ca. 0,8 mm dicken dicht gesinterten Scheiben mit einer Oberflächenrauhigkeit von durchschnittlich 40 - 60 $\mu$m.

Ausführungsbeispiel 4:

Pulver aus einem mit Sr dotiertem La/Mn-Perowskit (keramisches Elektrodenmaterial) mit der Partikelgrösse von durchschnittlich 2 $\mu$m wurde mit 50 Gew.-% Nitrobenzol als Lösungsmittel und 8 Gew.-% Nitrozellulose als Bindemittel zu einer viskosen Paste angerührt. Dieser wurden die üblichen, oben erwähnen Zusätze beigemischt. Ähnlich Beispiel 1 wurde zunächst eine poröse flexible Folie hergestellt und bei 300 °C wärmebehandelt. Das immer noch genügend flexible Band mit strukturierter Oberfläche wurde nun in einem weiteren Verfahrensschritt als untere Abdeckung 6 auf das Förderband 4 gelegt und mit einer weiteren Keramikmasse beschichtet. Diese zweite Keramikmasse stellte eine Paste aus einem keramischen Feststoffelektrolyten auf der Basis von stabilisiertem $ZrO_2$ dar. Zu diesem Zweck wurde aus $ZrO_2$-Pulver mit der mittleren Partikelgrösse von 0,5 $\mu$m mit 40 Gew.-% Toluol als Lösungsmittel und 4 Gew.-% Polymethacrylat als Bindemittel eine viskose Paste hergestellt und auf die rauhe Oberfläche des Perowskitbandes als untere Abdeckung 6 aufgetragen. Als obere Abdeckung 8 wurde ein poröses Textilgewebe benutzt. Dann wurde genau gleich wie in Beispiel 1 verfahren. Nach Verdampfung der Lösungsmittel und Austreiben der Bindemittel wurde das Ganze einer Wärmebehandlung bei 1600 °C während 3 h unterworfen. Dabei sinterten die beiden Keramikschichten zu einem monolithischen Ganzen zusammen. Am Schluss wurde als zweite Elektrode ein $Ni/ZrO_2$-Cermet in einer Dicke von 80 $\mu$m auf die $ZrO_2$-Elektrolytschicht durch Flammspitzen aufgetragen.

Ausführungsbeispiel 5:

Aus stabilisiertem $ZrO_2$-Pulver mit der Partikelgrösse 0,2-0,6 $\mu$m wurde durch Vermischen mit 40 Gew.-% einer Aethylalkohol/Toluol-Mischung als Lösungsmittel und 6 Gew.-% Polyvinylidenchlorid als Bindemittel eine Paste hergestellt. Dieses plastifizierte Keramikpulver 1 wurde auf eine untere Abdeckung 6 bestehend aus einem Filz gegossen und mit einer oberen Abdeckung 8 aus einem Kunstfasergeflecht belegt. Im weiteren wurde genau gleich wie unter Beispiel 1 vorgegangen. Die Sintertemperatur betrug 1800 °C, die Sinterdauer 5 h. Die er zielte Rauhigkeit lag in der Grössenordnung von 100 $\mu$m.

Die Erfindung ist nicht auf die Ausführungsbeispiele beschränkt.

Grundsätzlich besteht das Verfahren zur kontinuierlichen Herstellung einer beidseitig aufgerauhten dünnen, elastischen Keramikfolie mit gezielter Oberflächenstruktur in einem Bandgiessprozess, wobei als Keramikmasse ein mit Lösungsmitteln und Bindemitteln plastifiziertes Keramikpulver (1) in Form einer Paste oder eines Breis auf ein horizontal bewegtes Förderband (4) aufgebracht, mittels einer Schneide (5) glattgestrichen und kalibriert und das auf diese Weise erzeugte Laminat (10) vom Förderband (4) abgelöst und das darin enthaltene Lösungsmittel verdampft und die derart erhaltene, noch das Bindemittel enthaltende elastische Keramikfolie nach Massgabe des Verwendungszwecks geschnitten, weiterverarbeitet und gesintert wird, wobei das plastifizierte Keramikpulver (1) auf ein offen poröses erstes Band als untere Abdeckung (6) gegossen und mit einem offen porösen zweiten Band als obere Abdeckung (8) abgedeckt wird und dass das erzeugte, beidseitig mit einem porösen Band belegte Laminat (10) der thermischen Weiterverarbeitung zugeführt wird. Im allgemeinen besteht das Verfahren darin, dass das erzeugte, beidseitig mit einem porösen Band (6;8) belegte Laminat (10) mitsamt diesen Bändern (6;8) zur Verdampfung der Lösungsmittel und Zersetzung der Bindemittel thermisch weiterverarbeitet wird.

In einer ersten Variante wird das Verfahren derart durchgeführt, dass das als obere und/oder untere Abdeckung (6;8) dienende offen poröse Band aus einem bei Sintertemperatur der Keramikfolie rückstandfrei zersetzbaren und austreibbaren Material besteht, wobei letzteres ein Papiervlies, ein Löschpapier, ein Filz oder ein poröses Textilgewebe oder ein Schaumgummi, ein Kunststoffschaum oder ein Kunstfasergeflecht ist.

In einer anderen Verfahrensvariante wird das erzeugte, beidseitig mit einem porösen Band (6;8) belegte Laminat (10) getrocknet und sowohl vom ersten wie vom zweiten porösen Band (6;8) abgelöst und der Weiterverarbeitung zugeführt, wobei vorzugsweise das als obere und/oder untere Abdeckung (6;8) dienende offen poröse, vom Laminat (10) ablösbare Band aus einem feinmaschigen Drahtgeflecht oder Drahtnetz, aus einem fein gelochten Blech oder einem aufgerauhten Blech, einem mit Noppen oder Stoppeln versehenen Blech oder aus Metallschaum besteht.

In einer weiteren Variante wird derart verfahren, dass mindestens eines der offen porösen Bänder (6;8) aus einer biegsamen plastifizierten oder teilweise vorgesinterten elektrisch leitenden Elektrodenmasse aus einem keramischen Material oder einem Cermet oder einem metallischen Verbundwerkstoff besteht, und dass nach Verdampfung des Lösungsmittels und Austreiben des Bindemittels aus der Keramikfolie das Ganze einem Sinterprozess unterworfen wird, dergestalt, dass die verschiedenen Schichten innig und fest haftend zu einem monolithischen Ganzen verbunden werden. In einer bevorzugten Ausführung wird zur Herstellung der elastischen Keramikfolie plastifiziertes Keramikpulver (1) bestehend aus einem Hochtemperatur-Feststoffelektrolyten auf der Basis von dotiertem und stabilisiertem Zirkonoxyd verwendet.

**Ansprüche**

1. Verfahren zur kontinuierlichen Herstellung einer beidseitig aufgerauhten dünnen, elastischen Keramikfolie mit gezielter Oberflächenstruktur nach dem Bandgiessprozess, wobei als Keramikmasse ein mit Lösungsmitteln und Bindemitteln plastifiziertes Keramikpulver (1) in Form einer Paste oder eines Breis auf ein horizontal bewegtes Förderband (4) aufgebracht, mittels einer Schneide (5) glattgestrichen und kalibriert und das auf diese Weise erzeugte Laminat (10) vom Förderband (4) abgelöst und das darin enthaltene Lösungsmittel verdampft und die derart erhaltene, noch das Bindemittel enthaltende elastische Keramikfolie nach Massgabe des Verwendungszwecks geschnitten, weiterverarbeitet und gesintert wird, dadurch gekennzeichnet, dass das plastifizierte Keramikpulver (1) auf ein offen poröses erstes Band als untere Abdeckung (6) gegossen und mit einem offen porösen zweiten Band als obere Abdeckung (8) abgedeckt wird und dass das erzeugte, beidseitig mit einem porösen Band belegte Laminat (10) der thermischen Weiterverarbeitung zugeführt wird.

2. Verfahren nach Anspruch 1, dadurch gekennzeichnet, dass das erzeugte, beidseitig mit einem porösen Band (6;8) belegte Laminat (10) mitsamt diesen Bändern (6;8) zur Verdampfung der Lösungsmittel und Zersetzung der Bindemittel thermisch weiterverarbeitet wird.

3. Verfahren nach Anspruch 2, dadurch gekennzeichnet, dass das als obere und/oder untere Abdeckung (6;8) dienende offen poröse Band aus einem bei Sintertemperatur der Keramikfolie rückstandfrei zersetzbaren und austreibbaren Material besteht.

4. Verfahren nach Anspruch 3, dadurch gekennzeichnet, dass das als obere und/oder untere Abdeckung (6;8) dienende offen poröse Band aus einem Papiervlies, einem Löschpapier, einem Filz oder einem porösen Textilgewebe besteht.

5. Verfahren nach Anspruch 3, dadurch gekennzeichnet, dass das als obere und/oder untere Abdeckung (6;8) dienende offen poröse Band aus Schaumgummi, Kunststoffschaum oder Kunstfasergeflecht besteht.

6. Verfahren nach Anspruch 1, dadurch gekennzeichnet, dass das erzeugte, beidseitig mit einem porösen Band belegte Laminat (10) getrocknet und sowohl vom ersten wie vom zweiten porösen Band (6;8) abgelöst und der Weiterverarbeitung zugeführt wird.

7. Verfahren nach Anspruch 6, dadurch gekennzeichnet, dass das als obere und/oder untere Abdeckung (6;8) dienende offen poröse, vom Laminat (10) ablösbare Band aus einem feinmaschigen Drahtgeflecht oder Drahtnetz, aus einem fein gelochten Blech oder einem aufgerauhten Blech, einem mit Noppen oder Stoppeln versehenen Blech oder aus Metallschaum besteht.

8. Verfahren nach Anspruch 1, dadurch gekennzeichnet, dass mindestens eines der offen porösen Bänder (6;8) aus einer biegsamen plastifizierten oder teilweise vorgesinterten elektrisch leitenden Elektrodenmasse aus einem keramischen Material oder einem Cermet oder einem metallischen Verbundwerkstoff besteht, und dass nach Verdampfung des Lösungsmittels und Austreiben des Bindemittels aus der Keramikfolie das Ganze einem Sinterprozess unterworfen wird, dergestalt, dass die verschiedenen Schichten innig und fest haftend zu einem monolithischen Ganzen verbunden werden.

9. Verfahren nach Anspruch 8, dadurch gekennzeichnet, dass zur Herstellung der elastischen Keramikfolie plastifiziertes Keramikpulver (1) bestehend aus einem Hochtemperatur-Feststoffelektrolyten auf der Basis von dotiertem und stabilisiertem Zirkonoxyd verwendet wird.

# FIG.1

Aufbringen einer offen porösen unteren Abdeckung auf ein glattes endloses Förderband

↓

Giessen der Keramikmasse auf die untere Abdeckung und Glattstreichen mittels einer Schneide

↓

Auflegen einer offen porösen oberen Abdeckung auf die glattgestrichene Keramikmasse

↓

Ablösen des aus Keramikmasse und unterer und oberer Abdeckung bestehenden Laminates vom Förderband

↓

Erhitzen des Laminates zwecks Verdampfung des Lösungsmittels der Keramikmasse

↓

Weiterverarbeitung der erzeugten Folie durch mechanische Formgebung

↓

Brennen und Sintern der Keramikfolie zwecks Zersetzen des Bindemittels der Folie und Verbrennen der Abdeckungen

# FIG.2

Aufbringen einer offen porösen unteren Abdeckung auf ein glattes endloses Förderband

Giessen der Keramikmasse auf die untere Abdeckung und Glattstreichen mittels einer Schneide

Auflegen einer offen porösen oberen Abdeckung auf die glattgestrichene Keramikmasse

Ablösen des aus Keramikmasse und unterer und oberer Abdeckung bestehenden Laminates vom Förderband

Erhitzen des Laminates zwecks Verdampfung des Lösungsmittels der Keramikmasse

Ablösen der getrockneten Keramikfolie von den Abdeckungen

Weiterverarbeitung der erzeugten Folie durch mechanische Formgebung

Brennen und Sintern der Keramikfolie zwecks Zersetzen des Bindemittels der Folie

# FIG.3

```
┌─────────────────────────────────────────────────────────┐
│ Aufbringen einer plastifizierten elektrisch leitenden    │
│ Elektroden-                                              │
│ masse auf ein glattes endloses Förderband                │
└─────────────────────────────────────────────────────────┘
                            │
                            ▼
┌─────────────────────────────────────────────────────────┐
│ Giessen der Keramikmasse (Feststoffelektrolyt) auf die   │
│ Elektrodenmasse und Glattstreichen mittels einer Schneide│
└─────────────────────────────────────────────────────────┘
                            │
                            ▼
┌─────────────────────────────────────────────────────────┐
│ Auflegen einer offen porösen oberen Abdeckung auf die    │
│ glattgestrichene Keramikmasse                            │
└─────────────────────────────────────────────────────────┘
                            │
                            ▼
┌─────────────────────────────────────────────────────────┐
│ Ablösen des aus Keramikmasse, Elektrodenmasse und        │
│ oberer Abdeckung bestehenden Laminates vom Förderband    │
└─────────────────────────────────────────────────────────┘
                            │
                            ▼
┌─────────────────────────────────────────────────────────┐
│ Erhitzen des Laminates zwecks Verdampfung des Lösungs-   │
│ mittels der Keramikmasse und der Elektrodenmasse         │
└─────────────────────────────────────────────────────────┘
                            │
                            ▼
┌─────────────────────────────────────────────────────────┐
│ Weiterverarbeitung der erzeugten Folie durch mechanische │
│ Formgebung                                               │
└─────────────────────────────────────────────────────────┘
                            │
                            ▼
┌─────────────────────────────────────────────────────────┐
│ Brennen und Sintern der Keramikfolie zwecks              │
│ Zersetzen des Bindemittels der Folie und                 │
│ Verbrennen der Abdeckung                                 │
└─────────────────────────────────────────────────────────┘
```

# FIG.4

# EUROPÄISCHER RECHERCHENBERICHT

Europäisches
Patentamt

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 299 951   (WILH. GAIL'SCHE TONWERKE KG) <br> * Ansprüche 1,5-8; Seite 2, Zeilen 3-29; Figur 1 * <br> – – – | 1-4,6,7 | B 28 B 5/02 <br> C 04 B 35/00 |
| A | BE-A-5 288 10   (S.A. DES MANUFACTEURS DES GLACES ET PRODUITS CHIMIQUES) <br> * Ansprüche 1,10-13; Figuren 1-3 * <br> – – – | 1-9 | |
| A | EP-A-0 130 031   (MAT. RES. CORP.) <br> * Ansprüche 1,7,8,16; Seite 5, Zeilen 3-6; Figuren 1/1 * <br> – – – – – | 1-9 | |

| | |
|---|---|
| | RECHERCHIERTE SACHGEBIETE (Int. Cl.5) |
| | B 28 B <br> C 04 B |

Der vorliegende Recherchenbericht wurde für alle Patentansprüche erstellt

| Recherchenort | Abschlußdatum der Recherche | Prüfer |
|---|---|---|
| Den Haag | 05 Dezember 90 | LUETHE H. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument